# EUROPÄISCHE PATENTSCHRIFT

(11) **EP 0 754 650 B1**
(45) Veröffentlichungstag und Bekanntmachung des Hinweises auf die Patenterteilung: **27.06.2001**
(21) Anmeldenummer: 96108381.3
(22) Anmeldetag: 25.05.1996
(51) Int. Cl.: C01B 33/193

(54) **Fällungskieselsäure**
Precipitated silica
Silice précipitée

(30) Priorität: 20.07.1995 DE 19526476
(43) Veröffentlichungstag der Anmeldung: 22.01.1997
(73) Patentinhaber: Degussa AG, 40474 Düsseldorf (DE)
(72) Erfinder: Rausch, Ralf, Dr., 52372 Kreuzau (DE); Esch, Heinz, 53117 Bonn (DE); Kuhlmann, Robert, 50374 Erftstadt (DE); Türk, Günter, Dr., 63457 Hanau (DE); Meier, Karl, 53347 Alfter (DE); Meon, Walter, Dr., 63571 Gelnhausen 2 (DE)

(56) Entgegenhaltungen:
- EP-A- 0 078 909
- GB-A- 2 169 129
- US-A- 5 225 177
- US-A- 5 234 673

## Beschreibung

Die Erfindung betrifft eine Fällungskieselsäure, das Verfahren zu ihrer Herstellung und ihre Verwendung in Batterieseparatoren.

Es ist bekannt, Fällungskieselsäuren für die Herstellung von mikroporösen Polyethylen-Batterieseparatoren zu verwenden (US-PS 3,351,495, US-PS 4,024,323, US-PS 4,681,750). Diesen Kieselsäuren ist gemeinsam, daß das bei der Fällungsreaktion entstehende Salz während des Filtrierens bis auf einen Gehalt von < 2,5 Gew.% durch Waschen mit Wasser aus dem Filterkuchen entfernt wird. Der Gehalt von ≤ 2,5 Gew.% Salz bezieht sich auf den in der getrockneten Kieselsäure ermittelten Salzgehalt. Im Filterkuchen entspricht dies einem Salzgehalt von 0,625 % (siehe zum Beispiel US-PS 4,681,750, Spalte 8, Beispiel 1, Zeilen 20 - 23 und Tabelle 1, Beispiele 1 - 3).

Gegenstand der Erfindung ist eine Fällungskieselsäure, die einen Gehalt an Natriumsulfat von 4 bis 18 Gew.-% aufweist. Insbesondere kann die Fällungskieselsäure durch die folgenden physikalisch-chemischen Kenndaten gekennzeichnet sein:

| | |
|---|---|
| Natriumsulfatgehalt | 4 - 18, insbesondere |
| | 4 - 14 Gew.% |
| BET-Oberfläche (DIN 66131) | 100 - 190 m²/g |
| DBP-Absorption (wasserfrei) (DIN 53601, ASTM D 2414) | 208 - 250 g/100 g |
| Trocknungsverlust (2 h/105 °C) (DIN ISO 787/II, ASTM D 280, JIS K 5101/21) | 3,0 - 6,5 Gew.% |
| Siebrückstand mit ALPINE-Luftstrahlsieb | > 63 µm ≤ 10,0 Gew.% |
| | > 150 µm ≤ 0,1 Gew.% |
| | > 250 µm ≤ 0,01 Gew.% |

Ein weiterer Gegenstand der Erfindung ist ein Verfahren zur Herstellung der Fällungskieselsäure mit einem Gehalt an Natriumsulfat von 4 bis 18 Gew.-%, insbesondere mit den physikalisch-chemischen Kenndaten:

| | |
|---|---|
| Natriumsulfatgehalt | 4 - 18, insbesondere |
| | 4 - 14 Gew.% |
| BET-Oberfläche (DIN 66131) | 100 - 190 m²/g |
| DBP-Absorption (wasserfrei) (DIN 53601, ASTM D 2414) | 208 - 250 g/100 g |
| Trocknungsverlust (2 h/105 °C) (DIN ISO 787/II, ASTM D 280, JIS K 5101/21) | 3,0 - 6,5 Gew.% |
| Siebrückstand mit ALPINE-Luftstrahlsieb | > 63 µm ≤ 10,0 Gew.% |
| | > 150 µm ≤ 0,1 Gew.% |
| | > 250 µm ≤ 0,01 Gew.% |

welches dadurch gekennzeichnet ist, daß man in einem Fällbehälter unter Rühren heißes Wasser vorlegt, Wasserglas mit einem Modul SiO₂ : Na₂O = 3,22 ± 0,05 (SiO₂ = 27,73 ± 0,70 Gew.-%; Na₂O = 8,9 ± 0,20 Gew.-%; Dichte 1,362 ± 0,025 g/ml) solange hinzugibt, bis eine Alkalizahl von 7 ± 1 (die Alkalizahl ist der Verbrauch an 1-n HCl in Milliliter, der für die Neutralisation von 100 ml der Vorlagelösung bei der Verwendung von Phenolphtalein als Indikator benötigt wird) erreicht ist, danach auf eine Temperatur von 89 bis 93 °C aufheizt, diese Temperatur während der gesamten weiteren Fälldauer, während der man weiteres Wasserglas derselben Zusammensetzung und Schwefelsäure gleichzeitig an zwei voneinander getrennten Stellen derart hinzugibt, daß eine Alkalizahl von 7 ± 1 eingehalten wird, beibehält, danach die Fällungskieselsäuresuspension mit Schwefelsäure bis zu einem pH-Wert von 3,0 - 4,0 ansäuert, die Fällungskieselsäuresuspension, die einen Feststoffgehalt von 72 bis 88 g/l aufweist, mittels einer Filterpresse abtrennt, den erhaltenen ungewaschenen, natriumsulfathaltigen Fällungskieselsäurefilterkuchen mittels Wasser und mechanischer Scherkräfte verflüssigt, 5 mittels eines Sprühtrockners mit Zentrifugalzerstäuber bei einer Drehzahl von 8.500 - 10.000 Umdrehungen pro Minute trocknet und mittels einer Pendelmühle vermahlt.

In einer Ausführungsform der Erfindung kann man den Filterkuchen durch Waschen mit Wasser auf Natriumsulfatgehalte von 4,0 bis 8,5 %, bezogen auf die getrocknete Fällungskieselsäure einstellen.

Als Schwefelsäure kann man eine konzentrierte Schwefelsäure mit einer Konzentration von 90 bis 98 Gew.%, vorzugsweise 93 bis 95 Gew.%, einsetzen.

Während der Fällung kann man bei gleichzeitiger Dosierung der Wasserglaslösung und der Schwefelsäure eine Zulaufgeschwindigkeit von 9.800 bis 11.700 kg/h für die Wasserglaslösung und 1.300 bis 1.600 kg/h für die Schwefelsäure einhalten.

In einer Ausführungsform der Erfindung kann man nach 90-minütiger Fälldauer bei 90-93 °C die Zufuhr von Wasserglaslösung stoppen und die Zugabe von Schwefelsäure fortsetzen, bis ein pH-Wert von 8,5 erreicht wird. Danach kann auch die Schwefelsäurezugabe gestoppt und die Kieselsäuredispersion bei 90-93 °C 30 Minuten lang gealtert werden. Nach dieser Alterungsphase kann die Schwefelsäurezufuhr wieder aufgenommen und auf pH = 3,0 - 4,0 angesäuert werden.

In einer Ausführungsform der Erfindung kann ein Spinflashtrockner anstelle des Sprühtrockners eingesetzt werden, wobei der ungewaschene Filterkuchen einen Feststoffgehalt von 29 - 37 Gew.% aufweisen und man gegebenenfalls auf eine Vermahlung verzichten kann.

In einer weiteren Ausführungsform der Erfindung kann man anstelle der Pendelmühle eine Querstrommühle zur Vermahlung der Kieselsäure einsetzen.

Ein weiterer Gegenstand der Erfindung ist die Verwendung einer Fällungskieselsäure mit einem Gehalt an Natriumsulfat von 4 bis 14 Gew.-%, insbesondere mit folgenden physikalisch-chemischen Kenndaten:

| | |
|---|---|
| Natriumsulfatgehalt | 4 - 18, insbesondere 4 - 14 Gew.% |
| BET-Oberfläche (DIN 66131) | 100 - 190 m²/g |
| DBP-Absorption (wasserfrei) (DIN 53601, ASTM D 2414) | 208 - 250 g/100 g |

| | |
|---|---|
| Trocknungsverlust (2 h/105 °C) (DIN ISO 787/II, ASTM D 280, JIS K 5101/21) | 3,0 - 6,5 Gew.% |
| Siebrückstand mit ALPINE-Luftstrahlsieb | > 63 µm ≤ 10,0 Gew.% |
| | > 150 µm ≤ 0,1 Gew.% |
| | > 250 µm ≤ 0,01 Gew.% |

in Batterieseparatoren, insbesondere in Polyäthylen-Kieselsäure-Batterieseparatoren für Blei-Säure-Batterien.

Die erfindungsgemäßen Fällungskieselsäuren können in Batterieseparatoren (mikroporösen Trennelementen) für Blei-Säure-Batterien in einer Konzentration von 50 - 75 Gew.% verwendet werden.

Die erfindungsgemäßen Fällungskieselsäuren werden bei der Herstellung von mikroporösen Trennelementen für Batterien durch intensives Vermischen von Polyethylen mit hohem Molekulargewicht, Fällungskieselsäure, Prozeßflüssigkeit und Stabilisatoren, Weiterverarbeitung der Pulvermischung durch Extrusion zu einer Folie mit einer Folienstärke von 0,2 bis 0,5 mm und durch Extraktion der Prozeßflüssigkeit zum Einsatz gebracht.

Die Herstellung von Batterieseparatorenfolien unter Verwendung der erfindungsgemäßen natriumsulfathaltigen, sprühgetrockneten Kieselsäuren kann nach bekannten Methoden wie zum Beispiel gemäß US-PS 3,351,495, US-PS 4,237,083 oder DE-AS 14 96 123 erfolgen.

Ein weiterer Gegenstand der Erfindung ist ein Batterieseparator, der die erfindungsgemäße Fällungskieselsäure enthält. In einer Ausführungsform der Erfindung betrifft der Gegenstand der Erfindung einen Batterieseparator für Blei-Säure-Batterien, der aus Polyethylen besteht und eine erfindungsgemäße Fällungskieselsäure enthält.

Die erfindungsgemäßen Fällungskieselsäuren mit einem hohen Salzgehalt von 4 - 18 Gew.%, insbesondere 4 bis 14 Gew.-% (bezogen auf die bei 105 °C über 2 Stunden getrocknete Substanz) sind deutlich wirtschaftlicher herstellbar als die bisher zugänglichen Fällungskieselsäuren. So werden die variablen Kosten der Rohstoffe, Wasser und Energie um linear 7 - 12 Gew.% gesenkt; das sind ca. 5 % der Gesamtherstellungskosten. Des weiteren lassen sich ebenfalls die fixen Herstellkosten bei der Filtration erheblich senken, da die Waschzeiten entfallen bzw. reduziert sind. Auch entfallen die Waschwasserkosten insgesamt oder teilweise. Im Bereich der Trocknung lassen sich bis zu 40 % der Energiekosten einsparen. Der erhöhte Salzgehalt erhöht den Durchsatz bei der Vermahlung der Kieselsäure. Das höhere Schütt- bzw. Stampfgewicht führt zur Absenkung von Pack- und Frachtkosten.

Neben diesen erheblichen ökonomischen Vorteilen wird auch die Salzfracht im Abwasser spürbar verringert: Während bei einem Restsalzgehalt von 1,5 Gew.% insgesamt 97 % der bei der Kieselsäureherstellung anfallenden Salzmenge in das Abwasser gelangen, werden bei einem Restsalzgehalt von ca. 10 Gew.-% nur noch 84 % der erzeugten Salzmenge über das Abwasser aus dem Prozeß ausgeschleust; das ist insgesamt eine Entlastung um 13- 14 % der insgesamt erzeugten Salzmenge.

Werden die erfindungsgemäßen Fällungskieselsäuren in Standardrezepturen zu Polyäthylen-SiO₂-Batterieseparatoren verarbeitet, so zeigen diese ein sehr stabiles Verarbeitungsverhalten in Bezug auf Massendruck und Torquewerte. Während salzarme (1 - 2 %) sprühgetrocknete Kieselsäuren sich als nicht oder sehr schwierig verarbeitbar erweisen, zeigen die erfindungsgemäßen Kieselsäuren in diesem Punkt überhaupt keine Defizite. Der hohe Salzgehalt verhindert eine zu hohe Viskosität der Polymer-Kieselsäure-Schmelze und damit einen zu hohen Schmelzendruckaufbau im Extruder, der wiederum zu einem zu hohen Drehmoment (Torque) führt.

Völlig überraschend zeigt sich, daß die mittels der erfindungsgemäßen Kieselsäuren gefertigten PE-SiO₂-Separatoren nach zweiwöchiger Lagerung in Batteriesäure nur noch 66 % des elektrischen Widerstandes solcher Separatoren aufweisen, die Kieselsäuren mit nur 1 - 2 % Salzgehalt aufweisen, und dies trotz geringeren SiO₂-Gehaltes der erfindungsgemäßen Kieselsäuren, der einen Anstieg des elektrischen Widerstandes hätte erwarten lassen.

### Beispiele

### Die folgenden Rohstoffe

9,8 - 10,9 Gew.%.ultrahochmolekulares Polyäthylen
0,1 - 0,2 Gew.%.Rußmasterbatch
0,1 - 0,3 Gew.%.Stabilisator
28,5 - 29,3 Gew.%.Fällungskieselsäure
60,3 - 60,6 Gew.%.Mineralöl
werden durch intensives Vermischen in einem Schnellmischer in eine pulverförmige Mischung überführt. Die Weiterverarbeitung der Mischung erfolgt auf einem Zweischneckenextruder bei Temperaturen zwischen 175 und 190 °C. Die Formgebung der Separatorenfolie erfolgt mit einer Breitschlitzdüse und einem nachgeschalteten Kalander. Die Folienstärke liegt bei 0,2 bis 0,25 mm.

An den Vorgang der Extrusion und Kalandrierung schließt sich eine Extraktion an. Dazu wird das Mineralöl durch Extraktion mit n-Hexan weitgehend entfernt. Anschließend wird das von der Separatorfolie aufgesaugte n-Hexan durch Trocknung bei Raumtemperatur entfernt.

Als Fällungskieselsäure werden die Kieselsäuren mit Na₂SO₄-Gehalten < 2,5 Gew.% in ihrer sprühgetrockneten und spinflashgetrockneten Form und die entsprechenden erfindungsgemäßen Kieselsäuren mit Na₂SO₄-Gehalten im Bereich von 4 - 18 Gew.% geprüft. Somit stehen folgende Kieselsäuren mit niedrigen Na₂SO₄- solchen mit erhöhtem Na₂SO₄-Gehalt gegenüber:

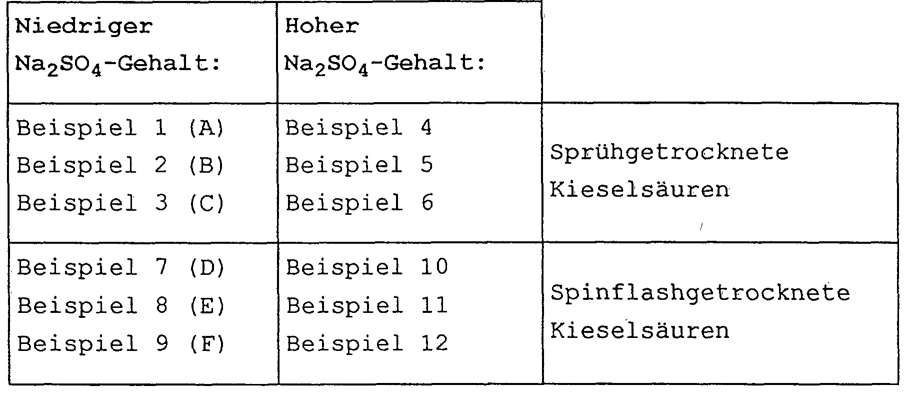

Beurteilt wird die Saugfähigkeit der Kieselsäure und die Rieselfähigkeit der Mischung bei der Herstellung der Mischung. Beim Dosieren und bei der Extrusion der Mischung wird das Drehmoment an der Extruderwelle (torque) und der Schmelzendruck vor der Düse beurteilt.

Die Drehmomentmessung beruht auf der Stromaufnahme des Antriebsmotors und wird in Prozent der maximal zulässigen Stromaufnahme angegeben.

Der Schmelzendruck in bar wird mit einer Druckmeßdose, deren Fühler vor der Zylinderwand in die Schmelze eintaucht, gemessen. Die Meßstelle befindet sich dabei zwischen Schneckenende und Düsenanfang.

Die erhaltenen Separatorenfolien werden wie folgt geprüft:

### Bestimmung des elektrischen Durchgangswiderstandes

Der Durchgangswiderstand der Separatorenfolie wird als Flächenwiderstand, bezogen auf die Foliendicke, ermittelt, wobei eine Folienprobe in einem Säurebad auf den elektrischen Widerstand untersucht wird. Einheit: mOhm x in²/mil.

### Geräte

- Battery-Tester Model 9100-2 Low Resistance Test System Hersteller: Palico Instrument Labaratories U.S.A.
- Wasserbad / temperierbar.

An den vorbereiteten Proben werden die Foliendicken ermittelt. Genauigkeit ± 0.01 mm. Die Proben werden in Batteriesäure gelagert. Nach der 20 minütigen Lagerung in Batteriesäure werden die Proben einzeln in die vorgesehene Vorrichtung des Batterie-Testers eingeführt. Der Meßvorgang wird wie in der Bedienungsanleitung des Batterie-Testers vermerkt, gestartet und die jeweiligen Meßdaten werden festgehalten. Mit den ermittelten Werten wird ein arithmetischer Mittelwert gebildet. Die gemessenen Proben werden erneut in Batteriesäure gelagert. Nach der 24 stündigen Lagerung in Batteriesäure werden die Proben einzeln in die entsprechende Vorrichtung des Batterie-Testers eingeführt. Der Meßvorgang wird wie in der Bedienungsanleitung des Batterie-Testers vermerkt, gestartet und die jeweiligen Meßdaten werden festgehalten. Mit den ermittelten Werten wird ein arithmetischer Mittelwert gebildet.

### Bestimmung der Zugfestigkeit und Bruchdehnung

Die Zugfestigkeit und die Bruchdehnung der Separatorenfolie werden ermittelt, indem man eine Folienprobe bis zum Reißen dehnt. Dabei wird die Dehngeschwindigkeit konstant gehalten. Die Dehnung und die aufgewendete Dehnkraft werden gemessen.

### Geräte:

- Universalprüfmaschine Typ TZM 771 20kN
   Hersteller: Otto Wolpert Werke GmbH
- Zubehör: Pneumatikspannkopf für dünne Folien.
   Hersteller: Otto Wolpert Werke GmbH
- Zubehör: Kraftaufnehmer 500 N
   Hersteller: Otto Wolpert Werke GmbH
- Folien-Rollenschneidmaschine

Aus den Proben werden je 4 Streifen (quer zur Extrusionsrichtung CMD) auf das Maß 100 (CMD) x 25 (MD) mm geschnitten. Die Foliendicke der Streifen wird ermittelt, Genauigkeit ± 0.01 mm. Die Universalprüfmaschine wird entsprechend der Bedienungsanleitung eingerichtet. Der einzelne Prüfstreifen wird in die Pneumatikspannköpfe der Universalprüfmaschine eingespannt, so daß ein Abstand zwischen den Spannköpfen von 50 mm gegeben ist. Die Einspanntiefe der Streifen beträgt je Spannkopf 25 mm. Der Kraftaufnehmer wird entsprechend der Bedienungsanleitung auf Null abgeglichen. Messbereich 0-50 N. Die Abzugsgeschwindigkeit beträgt 500 mm/min. Der Messvorgang wird gestartet. Aus den ermittelten Werten wird ein arithmetischer Mittelwert gebildet.

### Messauswertung:

- "Zugfestigkeit":: Kraftaufnahme in N / Fläche in mm² (Prüfstreifenbreite x Prüfstreifendicke) = Zugfestigkeit in N/mm²
- "Bruchdehnung":: Gesamte Länge der Probe nach dem Reißen, bezogen auf die Anfangslänge zwischen den Einspannvorrichtungen multipliziert mit 100%, ergibt die Bruchdehnung.

### Durchdrückfestigkeit der extrudierten Folie (Puncture Text)

Die punktuelle Festigkeit der Separatorenfolie wird ermittelt, indem man einen zylindrischen Stift mit halbkugelförmiger Spitze durch eine Probe drückt. Die dabei auftretende maximale Kraft ist ein Maß für die Durchdrückfestigkeit.

### Geräte:

- Prüfstand für Zug und Druckmessungen mit digitaler Steuerung, Modell TCD-200
   Hersteller: Fa. Chatillon Force Measurement Division Greensboro USA
- Zug und Druckmeßgerät DFI-10 Meßbereich 0-50 N Skalenteilung 0.05 N
   Hersteller: Fa. Chatillon Force Measurement Division Greensboro USA
- Drückstift aus Rundstahl
- Auflagepodest aus Stahl
- Lochmaske aus Stahlblech

Die vorbereitete Probe (Probengröße: 150 x 180 mm) wird auf das Auflagepodest gelegt und mit der Lochmaske fixiert. Die Meßeinrichtung wird aktiviert. Jede Probe (min 3 Stück) wird 5 mal geprüft. Nach Beendigung jedes einzelen Meßvorganges ist an der Anzeige des Druckmessgerätes die Durchdrückkraft in "N" abzulesen und zu notieren. Mit den ermittelten Werten wird ein arithmetischer Mittelwert gebildet.

### Schrumpfmessung von extrudierten Folien

Die Längen- und Breitenänderung der Separatorenfolie (Schrumpf) werden ermittelt, indem man die während des Herstellprozesses der Folien, vor allem während der Ölextraktion, auftretende Dimensionsänderungen nachstellt und quantifiziert.

### Geräte:

- Stahlmaßstab mit 0.5 mm Skalierung
- Lichtkasten mit Milchglasscheibe Maße 600 x 350 x 250 mm
- Fotoschale für Wasserbad ca. 5 1

Die Probe wird vermessen, (Längs zur Extrusionsrichtung (MD) und quer zur Extrusionsrichtung (CMD).
- Messung 1:: Genauigkeit: ± 0.25 mm. Die Proben werden extrahiert (wie in Verfahrensanweisung Ölextraktion). Die extrahierten ölreduzierten Proben werden vermessen (längs zur Extrusionsrichtung (MD) und quer zur Extrusionsrichtung (CMD)).
- Messung 2:: Genauigkeit: ± 0.25 mm. Die gemäß Messung 1 gestellten und behandelten Proben werden anschließend 60 Minuten in entsalztes Wasser getaucht. Nach der 60 min. Wasserlagerung werden die Proben entnommen und mittels eines Zellstofftuches abgetupft. Anschließend lagern die Proben 8 Stunden bei Raumtemperatur. Die Proben werden vermessen (längs zur Extrusionsrichtung (MD) und quer zur Extrusionsrichtung (CMD).
- Messung 3:: Genauigkeit: ± 0.25 mm

### Messauswertung

| | |
|---|---|
| "Extraktionsschrumpf" | Messung 2 / Messung 1 x 100 - 100 = X in % |
| "Wasserschrumpf" | Messung 3 / Messung 2 x 100 - 100 = X in % |

### Ölextraktion der extrudierten Folie

Durch die Extraktion von Batterieseparatoren-Folien (Blacksheet) wird das Öl in ein Lösungsmittel überführt. Diese ölreduzierte Folie entspricht dem Endprodukt des Separatorherstellprozeßes (Grey sheet). Bei der Ölextraktion soll ein möglichst gleichbleibender Restölgehalt von 12- 14 % in der Folie verbleiben. Dazu werden Folienabschnitte (mindestens 10) auf ein bestimmtes Maß mittels Papierhebelschere zurechtgeschnitten.

| | | |
|---|---|---|
| Maße: | MD = 180 mm | MD = Maschinen-Laufrichtung |
| | CMD = 150 mm | CMD = quer zur Maschinen-Laufrichtung |

Die Extraktion des Öls aus der Folie, wobei n-Hexan als Extraktionsmittel verwendet wird, erfolgt dreistufig in drei 10-Liter-Edelstahlbehältern:

Alle Proben (Blacksheet) wiegen. Genauigkeit: ± 0.01 gr. Die Proben einzeln in das Lösungsmittelbad legen. Verweilzeit im Lösungsmittelbad
a) 5-10 mil^{*} Folien: je 1 mal 2 Min pro Lösungsmittelbad.
b) 22 mil^{*} Folien: je 1 mal 5 Min pro Lösungsmittelbad. * 1 mil = 0,0254 mm
Folien 15 Minuten bei laufender Lüftung im Abzug abtrocken lassen.
Alle Proben (Greysheet) wiegen. Genauigkeit: ± 0.01 gr.

### Beispiel 1 (Vergleichsbeispiel): Kieselsäure A

In einem 75 m³ Behälter werden 1680 kg Natriumsilikatlösung (8,90 Gew.% Na₂O; 27,73 Gew.% SiO₂ mit Modul SiO₂: Na₂O = 3,22) und mit 56,4 m³ heißem Wasser auf 90 °C eingestellt. Die Alkalizahl dieser Mischung (Verbrauch von 1n HCl pro 100 ml Vorlagelösung gegen Phenolphtalein) liegt bei 7,0.

Während 90 Minuten werden gleichzeitig unter Konstanthalten der Alkalizahl = 7 und einer Temperatur von 89 - 91 °C 20910 kg Natriumsilikatlösung (57 °C, 8,90 Gew.% Na₂O und 27,73 Gew.% SiO₂ mit Modul SiO₂ : Na₂O = 3,22) und 2820 kg 94 %iger Schwefelsäure in die Vorlage unter Rühren einfließen gelassen.

Anschließend wird die Zufuhr an Natriumsilikatlösung gestoppt und die Zufuhr der 94 %igen Schwefelsäure fortgesetzt. Es fließen in 30 Minuten 545 kg Schwefelsäure unter Rühren in die Kieselsäuresuspension, deren pH-Wert danach 3,0 ist. Der Feststoffgehalt der Suspension liegt bei 87 g SiO₂/l.

Die Fällungskieselsäuresuspension wird mit 45.420 Liter Wasser verdünnt, die Fällungskieselsäure mittels einer Filterpresse abgetrennt und anschließend mit Wasser gewaschen.

Der Filterkuchen, dessen Feststoffgehalt bei ca. 20 Gew.% liegt, wird mittels mechanischer Scherkräfte unter Zugabe von konzentrierter Schwefelsäure bei einem pH-Wert von 3,7 bis 4,0 verflüssigt und anschließend in einem Sprühtrockner, der mit einer schnell rotierenden "Atomizer-Scheibe" ausgerüstet ist, getrocknet. Es werden ca. 9,0 m³ der Suspension pro Stunde zerstäubt und sprühgetrocknet. Die Drehzahl der Scheibe liegt bei 10.000 Upm. Es werden ca. 1,8 t (9 m³ · 20 Gew.% = 1,8 t SiO₂) Kieselsäure pro Stunde erhalten. Die Eintrittstemperatur der Heizgase liegt bei 700 bis 750 °C, die Temperatur der austretenden Gase bei 113 bis 118 °C. Die mittlere Verweilzeit eines Kieselsäurepartikels im Heizgasstrom beträgt ca. 9 bis 10 Sekunden. Die sprühgetrocknete Fällungskieselsäure wird durch einen Filter vom Heizgasstrom abgetrennt und mit einer Pendelmühle vermahlen. Die physikalisch-chemischen Daten sind in Tabelle 1 aufgeführt.

### Beispiel 2 (Vergleichsbeispiel): Kieselsäure B

In einem 75 m³ Behälter werden 1.725 kg
Natriumsilikatlösung (8,90 Gew.% Na₂O; 27,73 Gew.% SiO₂ mit Modul SiO₂ : Na₂O = 3,22) und 56,8 m³ heißes Wasser gemischt und auf 93°C eingestellt. Die Alkalizahl der Vorlage (Verbrauch von 1n HCl pro 100 ml Vorlagelösung gegen Phenolphtalein) liegt bei 7,0.

Während der folgenden 90 Minuten werden gleichzeitig unter Rühren und unter Konstanthalten der Alkalizahl bei 7 16.076 kg Natriumsilikatlösung (8,90 Gew.% Na₂O und 27,73 Gew.% SiO₂; Modul SiO₂ : Na₂O = 3,22; Temperatur 57 °C) und 2168 kg 94 %iger Schwefelsäure bei 91 - 93 °C in die Vorlage gegeben. Anschließend wird die Zufuhr an Natriumsilikatlösung gestoppt. Die Zufuhr der 94 %igen Schwefelsäure wird innerhalb von 30 Minuten unter weiterem Rühren fortgesetzt, bis der pH-Wert der Fällungssuspension sich auf 3,0 eingestellt hat. Der Feststoffgehalt der erhaltenen Fällungskieselsäuresuspension liegt bei 72 g/l. Die Suspension wird mit 38.000 Liter Wasser verdünnt, und die Fällungskieselsäure mittels einer Filterpresse abgetrennt und mit Wasser ausgewaschen.

Nach dem Waschprozeß wird der Filterkuchen, dessen Feststoffgehalt zwischen 19 und 20 Gew.% liegt, mittels mechanischer Scherkräfte unter Zugabe von konzentrierter Schwefelsäure bei einem pH-Wert von 3,0 bis 3,5 verflüssigt und anschließend einem Sprühtrockner, der mit einer schnell rotierenden "Atomizer-Scheibe" mit stufenlos regelbarer Drehzahl ausgerüstet ist, sprühgetrocknet. Dabei werden ca. 7,4 m³ der Suspension zerstäubt und sprühgetrocknet. Die Drehzahl der Scheibe wird auf 8.500 Upm eingestellt. Es werden ca. 1,5 t Kieselsäure pro Stunde erhalten. Die Eintrittstemperatur der Heizgase liegt bei 700 bis 750 °C, die Temperatur der austretenden Gase bei 140 bis 145 °C. Die sprühgetrocknete Fällungskieselsäure wird durch einen Filter vom Heizgasstrom abgetrennt und mit einer Pendelmühle mit Sichter von der Firma Neumann-Esser, Aachen mit einer Durchsatzleistung von ca. 1,9 t/h vermahlen. Dabei werden die Mahl- und Sichtbedingungen derart gewählt, daß ein Produkt mit der in Tabelle 1 angegebenen Kornverteilung entsteht. Es werden ca. 5,25 t einer Kieselsäure erhalten, deren physikalisch-chemische Daten in Tabelle 1 aufgeführt sind.

### Beispiel 3 (Vergleichsbeispiel): Kieselsäure C

In einem 75 m³ Behälter werden 1680 kg Natriumsilikatlösung (8,90 Gew.% Na₂O; 27,73 Gew.% SiO₂ mit Modul SiO₂: Na₂O = 3,22) und 56,6 m³ heißes Wasser gemischt und auf 90 °C eingestellt. Die Alkalizahl dieser Mischung (Verbrauch von 1n HCl pro 100 ml Vorlagelösung gegen Phenolphtalein) liegt bei 7,0.

Während 90 Minuten werden gleichzeitig unter Konstanthalten der Alkalizahl = 7 und einer Temperatur von 90 - 91 °C 21140 kg Natriumsilikatlösung (57 °C, 8,90 Gew.% Na₂O und 27,73 Gew.% SiO₂ mit Modul SiO₂ : Na₂O = 3,22) und 2851 kg 94 %iger Schwefelsäure unter Rühren hinzugegeben.

Anschließend wird die Zugabe an Natriumsilikatlösung gestoppt und die Zugabe der 94 %igen Schwefelsäure fortgeführt, bis sich nach ca. 25 Minuten ein pH-Wert von 8,5 einstellt.

Danach schließt sich eine 30 minütige Alterungsphase bei pH = 8,5 an, während der weder Säure noch Wasserglaslösung zugegeben werden.

Schließlich wird mit 94 %iger Schwefelsäure ein pH-Wert von ca. 4,0 einstellt. Der Feststoffgehalt der innerhalb von 10 Minuten erhaltenen Fällungskieselsäure liegt bei 88 g SiO₂/l.

Die Fällungskieselsäuresuspension wird mit 45.920 Liter Wasser verdünnt, die Fällungskieselsäure mittels einer Kammer-Filterpresse abgetrennt und mit Wasser gewaschen.

Danach wird der Filterkuchen, dessen Feststoffgehalt bei ca. 20 Gew.% liegt, mittels mechanischer Scherkräfte unter Zugabe von konzentrierter Schwefelsäure bei einem pH-Wert von 3,7 bis 4,0 verflüssigt und anschließend in einem Sprühtrockner, der mit einer schnell rotierenden "Atomizer-Scheibe" ausgerüstet ist, getrocknet. Es werden ca. 9,0 m³ der Suspension pro Stunde zerstäubt und sprühgetrocknet. Die Drehzahl der Scheibe liegt bei 10.000 Upm. Es werden ca. 1,8 t (9 m³ · 20 Gew.% = 1,8 t Sio₂) Kieselsäure pro Stunde erhalten. Die Eintrittstemperatur der Heizgase liegt bei 700 bis 750 °C, die Temperatur der austretenden Gase bei 113 bis 118 °C. Die mittlere Verweilzeit eines Kieselsäurepartikels im Heizgasstrom beträgt ca. 9 bis 10 Sekunden. Die sprühgetrocknete Fällungskieselsäure wird durch einen Filter vom Heizgasstrom abgetrennt und mit einer Pendelmühle vermahlen. Es wird eine Kieselsäure erhalten, deren physikalisch-chemische Daten in Tabelle 1 aufgeführt sind.

### Beispiel 4

Die Herstellung einer erfindungsgemäßen Fällungskieselsäure erfolgt analog dem Beispiel 1. Nach der Fällung wird die Fällungskieselsäure mittels einer Filterpresse aus der Fällungssuspension abgetrennt. Der natriumsulfathaltige Filterkuchen wird nicht gewaschen. Er wird mittels mechanischer Scherkräfte - gegebenenfalls unter Zusatz von wenig Wasser - verflüssigt und gemäß Beispiel 1 weiter aufgearbeitet. Es wird eine Kieselsäure erhalten, deren physik.-chemische Daten in Tabelle 1 aufgeführt sind.

### Beispiel 5

Die Herstellung einer erfindungsgemäßen Fällungskieselsäure erfolgt analog Beispiel 2. Nach der Fällung wird die Fällungskieselsäure aus der Fällungssuspension mittels einer Filterpresse abgetrennt. Der natriumsulfathaltige Filterkuchen wird nicht gewaschen, sondern durch Anwendung mechanischer Scherkräfte - gegebenenfalls unter Zusatz von wenig Wasser - verflüssigt und gemäß Beispiel 2 weiter aufgearbeitet. Es wird eine Kieselsäure erhalten, deren physik.-chemische Daten in Tabelle 1 aufgeführt sind.

### Beispiel 6

Die Herstellung einer erfindungsgemäßen Fällungskieselsäure erfolgt analog Beispiel 3. Nach der Fällung wird die Fällungskieselsäure mittels einer Kammerfilterpresse aus der Fällungssuspension abgetrennt. Der natriumsulfathaltige Filterkuchen wird nicht gewaschen, sondern mittels mechanischer Scherkräfte unter Zugabe von konzentrierter Schwefelsäure (bis pH = 3,7 - 4,0) verflüssigt und gemäß Beispiel 3 weiter aufgearbeitet. Es wird eine Kieselsäure erhalten, deren physik.-chemische Daten in Tabelle 1 aufgeführt sind.

### Beispiel 7 (Vergleichsbeispiel): Kieselsäure D

Die Herstellung der Kieselsäure D erfolgt im Fällungsverfahren gemäß Beispiel 1. Die Abtrennung der Kieselsäure aus der Fällungssuspension erfolgt mittels einer Membranfilterpresse (24 % Feststoffgehalt). Der Filterkuchen wird spinflashgetrocknet. Es wird keine Vermahlung angeschlossen. Die physikalisch-chemischen Daten der Kieselsäure sind in Tabelle 2 wiedergegeben.

### Beispiel 8 (Vergleichsbeispiel): Kieselsäure E

Die Herstellung der Kieselsäure E erfolgt im Fällschritt gemäß Beispiel 2. Die Abtrennung der Kieselsäure aus der Fällungssuspension erfolgt mittels einer Membranfilterpresse (23 % Feststoffgehalt). Der Filterkuchen wird spinflashgetrocknet; es wird keine Vermahlung angeschlossen. Die physikalisch-chemischen Daten der Kieselsäure sind in Tabelle 2 aufgeführt.

### Beispiel 9 (Vergleichsbeispiel): Kieselsäure F

Die Herstellung der Kieselsäure F erfolgt im Fällschritt gemäß Beispiel 3. Die Abtrennung der Kieselsäure aus der Fällungssuspension erfolgt mittels einer Membranfilterpresse (24 % Feststoffgehalt). Der Filterkuchen wird spinflashgetrocknet. Es wird keine Vermahlung durchgeführt. Die physikalisch-chemischen Daten der Kieselsäure sind in Tabelle 2 zusammengefaßt.

### Beispiel 10

Die Herstellung der erfindungsgemäßen Fällungskieselsäure erfolgt gemäß Beispiel 7. Einziger Unterschied zu Beispiel 7 ist, daß der natriumsulfathaltige Filterkuchen nicht gewaschen wird. Es resultiert ein Filterkuchen mit 32,6 Gew.% Feststoff (8,6 % Na₂SO₄ + 24 % SiO₂). Die physikalisch-chemischen Daten dieser Kieselsäure entnimmt man der Tabelle 2.

### Beispiel 11

Die Herstellung der erfindungsgemäßen Fällungskieselsäure erfolgt gemäß Beispiel 8. Einziger Unterschied zu Beispiel 8 ist, daß der natriumsulfathaltige Filterkuchen nicht gewaschen wird. Es resultiert ein Filterkuchen mit 31,9 Gew.% Feststoff (8,9 % Na₂SO₄ + 23 % SiO₂). Die physikalisch-chemischen Daten dieser Kieselsäure entnimmt man der Tabelle 2.

### Beispiel 12

Die Herstellung der erfindungsgemäßen Fällungskieselsäure erfolgt gemäß Beispiel 9. Einziger Unterschied zu Beispiel 9 ist, daß der natriumsulfathaltige Filterkuchen nicht gewaschen wird. Es resultiert ein Filterkuchen mit 33,1 Gew.% Feststoff (8,6 % Na₂SO₄ + 24,5 % SiO₂). Die physikalisch-chemischen Daten dieser Kieselsäure finden sich in Tabelle 2.

Die physikalisch-chemischen Daten der gemäß den Beispielen 1 - 12 hergestellten Kieselsäuren sind in den Tabellen 1 und 2 aufgeführt.

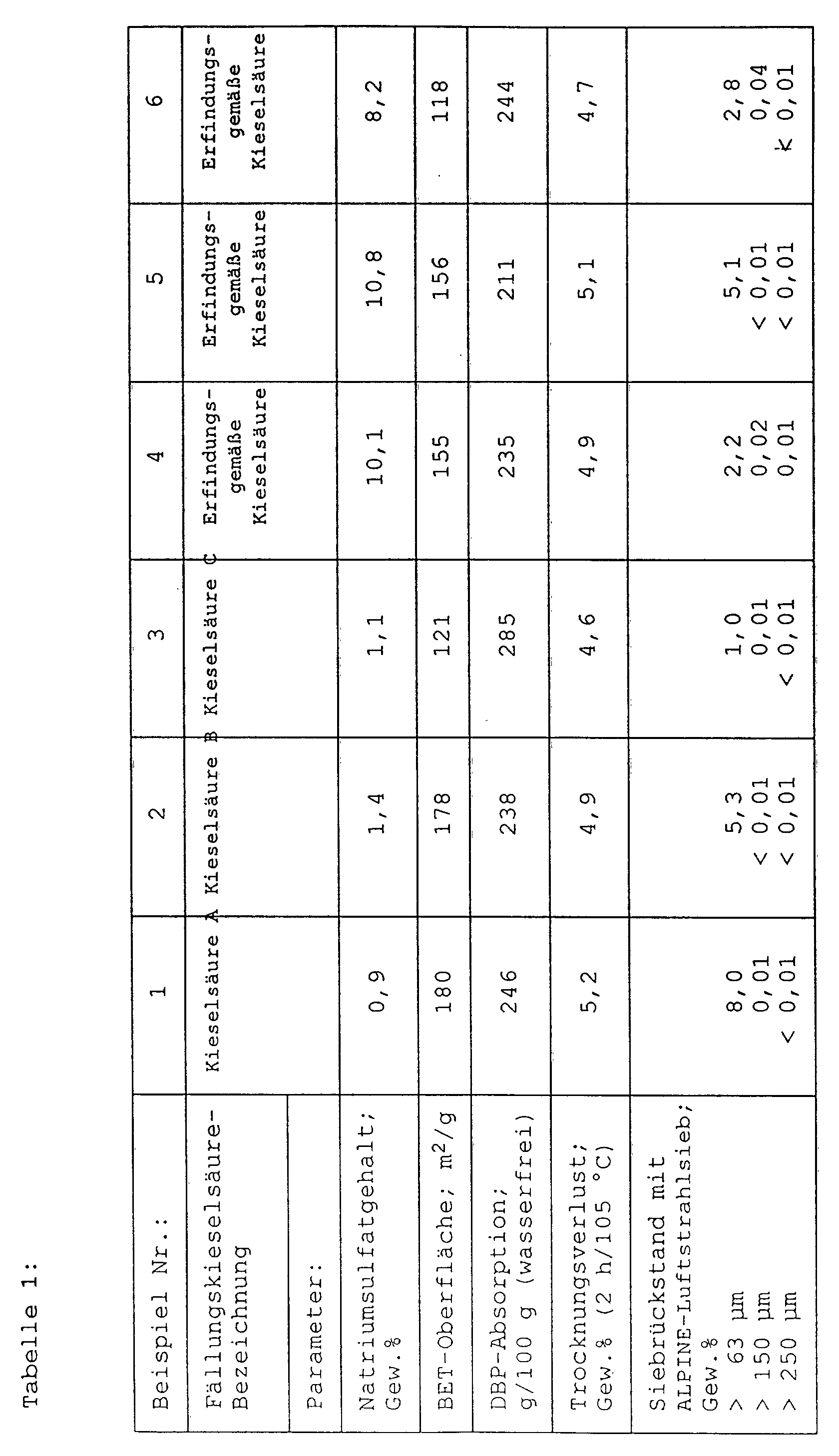

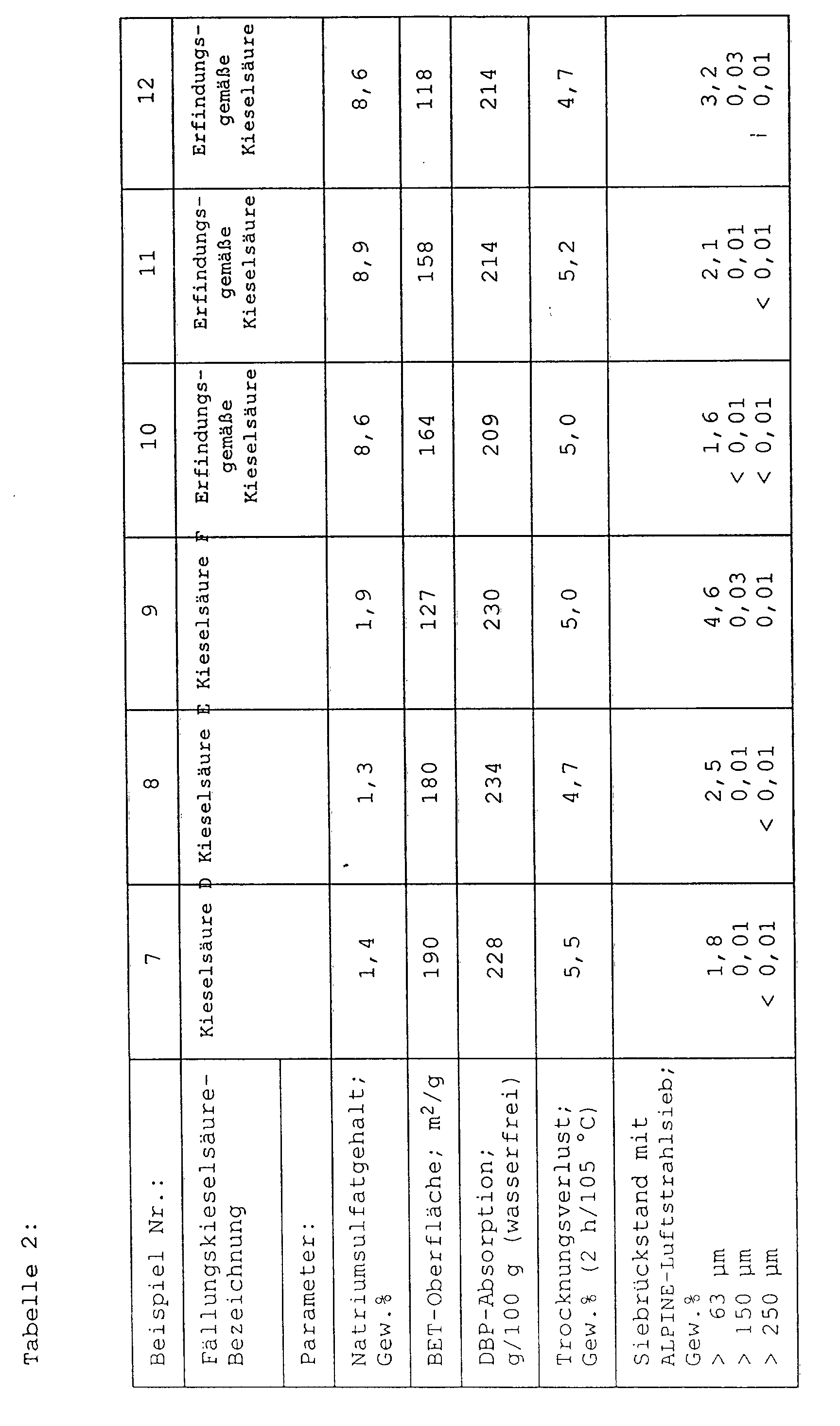

Die Bestimmung der physikalisch-chemischen Daten erfolgt mit folgenden Meßmethoden:

### 1. BET-Oberfläche:

DIN 66 131

### 2. DBP-Absorption:

DIN 53 601 / ASTM D 2414

### 3. Trocknungsverlust:

DIN ISO 787/II, ASTM D 280, JIS K 5101/21

### 4. Siebrückstand mit dem ALPINE-Luftstrahlsieb

Die Fällungskieselsäure wird durch ein 500 µm Sieb abgesiebt, um eventuell vorhandene Entlüftungsknoten zu entfernen. Dann werden 10 g der gesiebten Fällungskieselsäure auf ein bestimmtes Luftstrahlsieb gegeben und bei einem Unterdruck von 200 mm Wassersäule abgesiebt. Fällungskieselsäurepartikel, die sich am Acrylglasdeckel des Siebgerätes absetzen, werden durch einige Schläge auf den Knopf des Siebdeckels abgeklopft. Die Siebung ist beendet, wenn der Rückstand konstant bleibt, was meistens am rieselfähigen Aussehen zu erkennen ist. Zur Sicherheit siebt man dann noch eine Minute. Im allgemeinen dauert der Siebvorgang fünf Minuten. Bei Materialien, die nur Kornanteile von < 500 µm enthalten, wird die Probe vorher nicht abgesiebt, sondern direkt auf das Luftstrahlsieb gegeben.

Bei eventuell sich bildenden Agglomeraten wird der Siebvorgang kurz unterbrochen und die Agglomerate werden mit einem Pinsel unter leichtem Druck zerstört. Nach der Siebung wird der Siebrückstand vorsichtig von dem Luftstrahlsieb geklopft und zurückgewogen.
- Berechnung:: Der Siebrückstand wird in Gewichtsprozenten in Verbindung mit der Maschenweite des Siebes angegeben.
- Geräte:: ALPINE-Luftstrahlsieb, Labortyp S 200, mit Siebgewebe nach DIN 4188.

### 5. Sulfatgehalt

0,3 - 0,4 g einer Fällungskieselsäure werden im Reinst-Sauerstoffstrom bei 1350 °C thermisch behandelt. Alle Schwefelverbindungen werden somit in SO₂ überführt, das zusammen mit einem Trägergas - Reinst-Sauerstoff - durch eine Infrarotzelle, den Sulfur Determinator SC 32, der Firma LECO geleitet wird. Aus der Infrarotmessung gelangt man zum SO₄⁻²-Gehalt.Die Messung wird unter Einbeziehung von Standards kontrolliert.

In den Beispielen 13 - 24 werden die gemäß Beispielen 1 - 12 hergestellten Kieselsäuren anwendungsstechnisch geprüft (Extrusion) und charakterisiert (Folieneigenschaften).

### Beispiel 13

750 g Kieselsäure gemäß Beispiel 1 werden in einem Fluidmischer (Typ FM 10 C der Firma Thyssen Henschel, Kassel, BRD) mit 288 g Hostalen GUR 4130 (ultrahochmolekulare Polyäthylentype hoher Dichte der Firma HOECHST AG, Frankfurt a.M.) mit 6,5 g Antioxydans Topanol® O (Firma ICI, England; butyliertes Hydroxytoluol), sowie mit 4,0 g Farbrußbatch COLCOLOR® E 50/G (Firma DEGUSSA AG, Frankfurt/Main. 50 % Pigmentrußanteil PRINTEX® G in Polyäthylen niedriger Dichte) bei einer Drehzahl von 700 Upm vermischt und dann mit einer Menge von 1590 g Gravex Mineralöl 942 (Firma Shell) mit Hilfe einer Zahnradpumpe und einer Einstoffdüse besprüht. Hierdurch entsteht ein rieselfähiges und kontinuierlich dosierbares Pulver, das mit Hilfe eines Doppelschneckenextruders (Typ ZSK 30 M 9/2 der Firma Werner & Pfleiderer, Stuttgart) mit heizbarer Flachfoliendüse von 220 mm Breite (Firma Göttfert Prüfmaschinen GmbH, Buchen) sowie mit Hilfe eines Dreiwalzenkalanders (Typ Polyfol 150 3 S der Firma Ruth Schwabenthan, Berlin) zu einer Folie von etwa 0,25 mm Dicke verarbeitet wird. Bei einer Schneckendrehzahl von 50 Upm wird ein Temperaturprofil zwischen Einzugszone des Extruders und Düse von 150 bis 195 °C gewählt. Die zwischen Extruder und Düse gemessene Schmelzentemperatur stellt sich dabei auf 190 °C ein. Am Doppelschneckenextruder lassen sich der Schmelzendruck in bar und das Drehmoment der Schnecken in % des maximal zulässigen Drehmoments als Maß für das Verarbeitungsverhalten der Mischung während der Extrusion ablesen. Aus der derart hergestellten Folie wird das Mineralöl anschließend mit Hilfe von Hexan weitgehend extrahiert, so daß eine mikroporöse Separatorfolie entsteht. Die an der hergestellten Folie ermittelten Meßwerte sind in Tabelle 3 zusammengestellt. Diese Werte bilden die Bezugswerte für das Beispiel 16.

### Beispiel 14

750 g einer Fällungskieselsäure gemäß Beispiel 2 werden in einem Fluidmischer (Typ FM 10 C der Firma Thyssen Henschel, Kassel) mit 250 g Himont 1900 (ultrahoch-molekulares Polyäthylen hoher Dichte der Firma Himont, USA), mit 4,0 g COLCOLOR® E50/G (Rußkonzentrat mit 50 % Pigmentruß PRINTEX® G in Polyäthylen niedriger Dichte der Firma DEGUSSA AG, Ffm.), sowie mit 2,4 g Topanol® O (butyliertes Hydroxytoluol als Antioxydans, Firma ICI, England) bei einer Drehzahl von 700 Upm vermischt und sodann mit einer Menge von 1550 g Gravex 942 Mineralöl der Firma Shell mit Hilfe einer Zahnradpumpe und einer Einstoffdüse besprüht. Hierdurch entsteht ein rieselfähiges und kontinuierlich dosierbares Pulver, das mit Hilfe eines Doppelschneckenextruders (Typ ZSK 30 M 9/2 der Firma Werner & Pfleiderer, Stuttgart) mit heizbarer Flachfoliendüse von 220 mm Breite (Firma Göttfert Prüfmaschinen GmbH, Buchen) sowie mit Hilfe eines Dreiwalzenkalanders (Typ Polyfol 150 3 S der Firma Ruth Schwabenthan, Berlin) zu einer Folie von etwa 0,25 mm Dicke verarbeitet wird. Bei einer Schneckendrehzahl von 50 Upm wird ein Temperaturprofil zwischen Einzugszone des Extruders und Düse von 150 bis 195 °C gewählt. Die zwischen . Extruder und Düse gemessene Schmelzentemperatur stellt sich dabei auf 187 °C ein. Am Doppelschneckenextruder lassen sich der Schmelzendruck in bar und das Drehmoment der Schnecken in % des maximal zulässigen Drehmoments als Maß für das Verarbeitungsverhalten der Mischung während der Extrusion ablesen. Aus der derart hergestellten Folie wird das Mineralöl anschließend mit Hilfe von Hexan weitgehend extrahiert, so daß eine mikroporöse Separatorfolie entsteht. Die an der hergestellten Folie ermittelten Meßwerte sind in Tabelle 3 zusammengestellt. Diese Werte bilden die Bezugswerte für das Beispiel 17.

### Beispiel 15

Die Herstellung einer Separatorfolie, die Kieselsäure C (Beispiel Nr. 3) als Vergleichskieselsäure enthält, folgt im wesentlichen dem Weg des Beispiels Nr. 13. Wegen der deutlich erhöhten Absorption dieser Kieselsäure wird die Oelmenge von 1590 g auf 1900 g Oel erhöht. Außerdem wird an Stelle von GUR 4130 das HOECHST-Polymer GUR 4132 ex Bayport verwendet. Die zwischen Extruder und Düse gemessene Schmelzentemperatur stellt sich dabei auf 193 °C. Der Schmelzendruck beträgt 136 bar, und das Drehmoment (Torque) weist dabei einen Wert von 53 % auf. Die an der Folie erhaltenen Meßwerte sind in Tabelle 3 zusammengestellt. Diese Werte bilden die Bezugswerte für das Beipiel 18.

### Beispiel 16

750 g Kieselsäure gemäß Beispiel 4 werden in einem Fliudmischer (Typ FM 10 C der Firma Thyssen Henschel, Kassel BRD) mit 288 g Hostalen GUR 4130 (ultrahochmolekulare Polyäthylentype hoher Dichte der Firma CELANESE (Hoechst AG), Bayport, Texas, USA) mit 6,5 g Antioxydans Topanol® O (Firma ICI, England, butyliertes Hydroxytoluol); sowie mit 4,0 g COLCOLOR® E50/G (Firma DEGUSSA AG., Ffm. 50 % Pigmentrußanteil PRINTEX® G in Polyäthylen niedrigerer Dichte) bei einer Drehzahl von 700 Upm vermischt und dann mit einer Menge von 1590 g Gravex 942 Mineralöl der Firma SHELL mit Hilfe einer Zahnradpumpe und einer Einstoffdüse besprüht. Bezüglich der Extrusion und Extraktion wird wie im Beispiel 13 beschrieben verfahren. Die zwischen Extruder und Düse gemessene Schmelzentemperatur stellt sich dabei auf 195 °C ein. Die an der Folie ermittelten Meßwerte finden sich in Tabelle 3. Diese Werte sind mit denen des Vergleichsbeispiels 13 zu vergleichen.

### Beispiel 17

Nach Maßgabe der Rezeptur und Verfahrensweise des Beispiels 14 wird die gemäß Beispiel 5 hergestellte erfindungsgemäße Kieselsäure getestet. Die zwischen Extruder und Düse gemessene Schmelzentemperatur stellt sich dabei auf 175 °C ein; der Schmelzendruck bei 162 bar und der Torquewert mit 52 % belegen zusätzlich das sehr günstig einzustufende Extrusionsverhalten dieser sprühgetrockneten Kieselsäure mit hohen Natriumsulfatgehalt. Die an der hergestellten Folie gemessenen Werte findet man in Tabelle 3. Diese Daten sind mit denen des Vergleichsbeispiels 14 zu vergleichen.

### Beispiel 18

Nach Maßgabe der Rezeptur und Verfahrensweise des Beispiels 15 wird die gemäß Beispiel 6 hergestellte erfindungsgemäße Kieselsäure getestet. Die zwischen Extruder und Düse gemessene Schmelzentemperatur stellt sich dabei auf nur 191 °C ein; der Schmelzendruck bei 128 bar und der Torquewert mit 50% zeigen zusätzlich die positiven Effekte des hohen Salzgehaltes auf das Extrusionsverhalten. Die an der Folie gemessenen Werte finden sich in Tabelle 3. Diese Werte sind mit solchen des Vergleichsbeispiels 15 zu vergleichen.

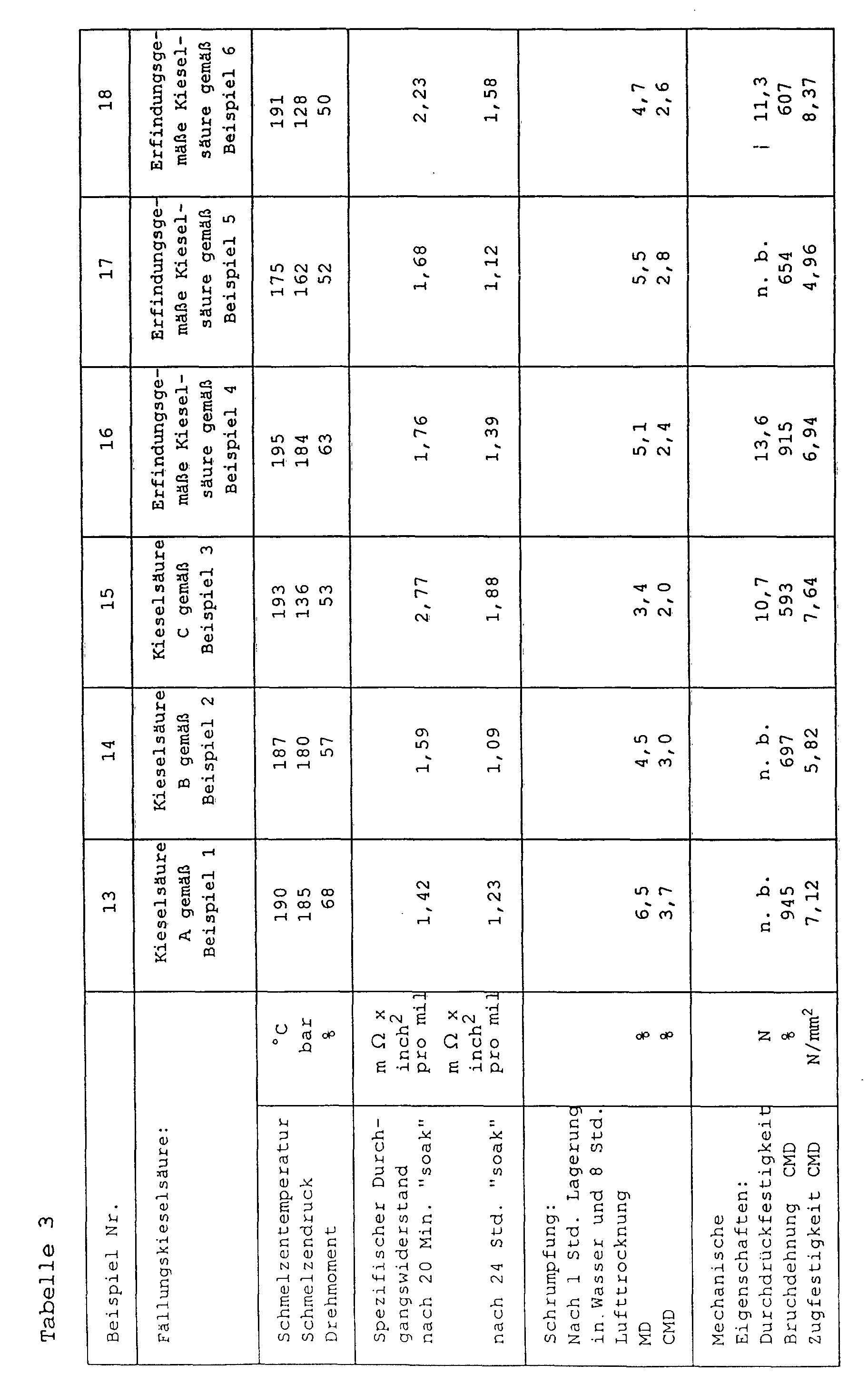

### Beispiel 19

Nach Maßgabe der Rezeptur und Verfahrensweise des Beispiels 13 wird die gemäß Beispiel 7 hergestellte Kieselsäure anwendungstechnisch geprüft. Die zwischen Extruder und Düse gemessene Schmelzentemperatur stellt sich dabei auf 192 °C ein. Die an der Folie gemessenen Daten finden sich in Tabelle 4. Diese Werte sind mit den Daten des Beispiels 22 zu vergleichen.

### Beispiel 20

Nach Maßgabe der Rezeptur und Verfahrensweise des Beispiels 14 wird die gemäß Beispiel 8 hergestellte Kieselsäure anwendungstechnisch geprüft. Die zwischen Extruder und Düse gemessene Schmelzentemperatur stellt sich dabei auf 181 °C ein. Die an der Folie gemessenen Daten finden sich in Tabelle 4. Sie sind mit den Daten des Beispiels 23 zu vergleichen.

### Beispiel 21

Nach Maßgabe von Rezeptur und Verfahrensweise des Beispiels 15 wird die gemäß Beispiel 9 hergestellte Kieselsäure anwendungstechnisch geprüft. Die zwischen Extruder und Düse gemessene Schmelzentemperatur stellt sich dabei auf 192 °C ein. Die an der Folie gemessenen Daten finden sich in Tabelle 4. Sie sind mit den Daten des Beispiels 24 zu vergleichen.

### Beispiel 22

Nach Maßgabe von Rezeptur und Verfahrensweise des Beispiels 19 wird die gemäß Beispiel 10 hergestellte, erfindungsgemäße Kieselsäure getestet. Variiert wird lediglich die Oelmenge auf 1450 g. Die Extrusionsdaten (siehe Tabelle 4) werden durch den hohen Salzgehalt der erfindungsgemäßen Kieselsäure sehr günstig beinflußt. Die an der Folie gemessenen Daten findet man in Tabelle 4. Sie sind mit den Daten des Vergleichsbeispiels 19 zu vergleichen.

### Beispiel 23

Nach Maßgabe von Rezeptur und Verfahrensweise des Beispiels 20 wird die gemäß Beispiel 11 hergestellte, erfindungsgemäße Kieselsäure geprüft. Die Extrusionsdaten (siehe Tabelle 4 und dort Schmelzentemperatur, Schmelzendruck und Drehmomentwert) werden durch den hohen Salzgehalt der erfindungsgemäßen Kieselsäure deutlich reduziert, was den Extrusionsablauf günstig beeinflußt. Die an der Folie gemessenen Daten finden sich in Tabelle 4. Sie sind mit den Daten des Vergleichsbeispiels 20 zu vergleichen.

### Beispiel 24

Nach Maßgabe von Rezeptur und Verfahrensweise des Beispiels 21 wird die gemäß Beispiel 12 hergestellte, erfindungsgemäße Kieselsäure geprüft. Die zwischen Extruder und Düse gemessenen Schmelzentemperatur stellt sich dabei auf einen erniedrigten Wert von 189°C ein. Auch Schmelzendruck- und Drehmomentwert tendieren nach unten, was die Extrusion (Prozeßfähigkeit) der Mischung sehr positiv beeinflußt. Die an der Folie gemessenen Daten finden sich in Tabelle 4. Sie sind mit den Daten des Vergleichsbeispiels 21 zu vergleichen.

Generell läßt sich aus den Tabellen 3 und 4 entnehmen, daß jeweils beim Vergleich der Daten für die Herstellung von Separatoren mit Kieselsäuren, die einen Na₂SO₄-Gehalt (< 2,5 Gew.-%) aufweisen und solche, die aus Kieselsäuren mit erhöhtem Salzgehalt hergestellt werden, ein höherer Salzgehalt das Drehmoment erniedrigt. Dies gilt auch für den Massendruck und die Schmelzentemperatur. Es gilt also, daß ein steigender Salzgehalt die Prozeßfähigkeit der Mischungen verbessert (vergleiche Beipiel 13 mit Beispiel 16 und Beispiel 14 mit Beispiel 17, sowie Beispiel 19 mit Beispiel 22 und Beispiel 20 mit Beispiel 23).

Bei den Filmdaten fällt auf, daß bei Separatoren aus Kieselsäuren mit hohem Na₂SO₄-Gehalt die Schrumpfwerte spürbar erniedrigt werden, während sich die elektrischen und mechanischen Daten trotz des um 10 % niedrigeren Kieselsäureanteils kaum verändern (vergleiche Beispiel 13 mit 16; Beispiel 14 mit 17; Beispiel 19 mit 22; Beispiel 20 mit 23).

### Beispiel 25

1500 g der handelsüblichen Kieselsäure Ultrasil® VN3 fbg werden gemäß der Vorschrift des Beispiel 13 mit 577 g Hostalen GUR 4130 Bayport (ultrahochmolekulares Polyäthylen hoher Dichte der Firma CELANESE, , Bayport, Texas, USA), mit 8,0 g Rußbatch COLCOLOR® E50 /G (Rußkonzentrat mit 50 % Pigmentruß PRINTEX® G in Polyäthylen, Fa. DEGUSSA AG, Ffm.) und mit 13,0 g Antidoxationsmittel Topanaol O (butyliertes Hydroxytoluol der Fa. ICI, England), sowie mit einer Menge von 3180 g Gravex-Oel 942 (Mineralöl der Firma Shell) vermischt und verarbeitet. Die Extrusion zu einer ölhaltigen Separatorfolie (black sheet) erfolgt gleichfalls nach Vorschrift des Beispiel 13. Die ölhaltige Folie wird gemäß der vorstehenden Verfahrensanweisung mit n-Hexan auf einen Restölgehalt von 12- 14 Gew.% extrahiert. Dieses grey sheet wird den Lagerungstests gemäß Beispiel 27 unterzogen.

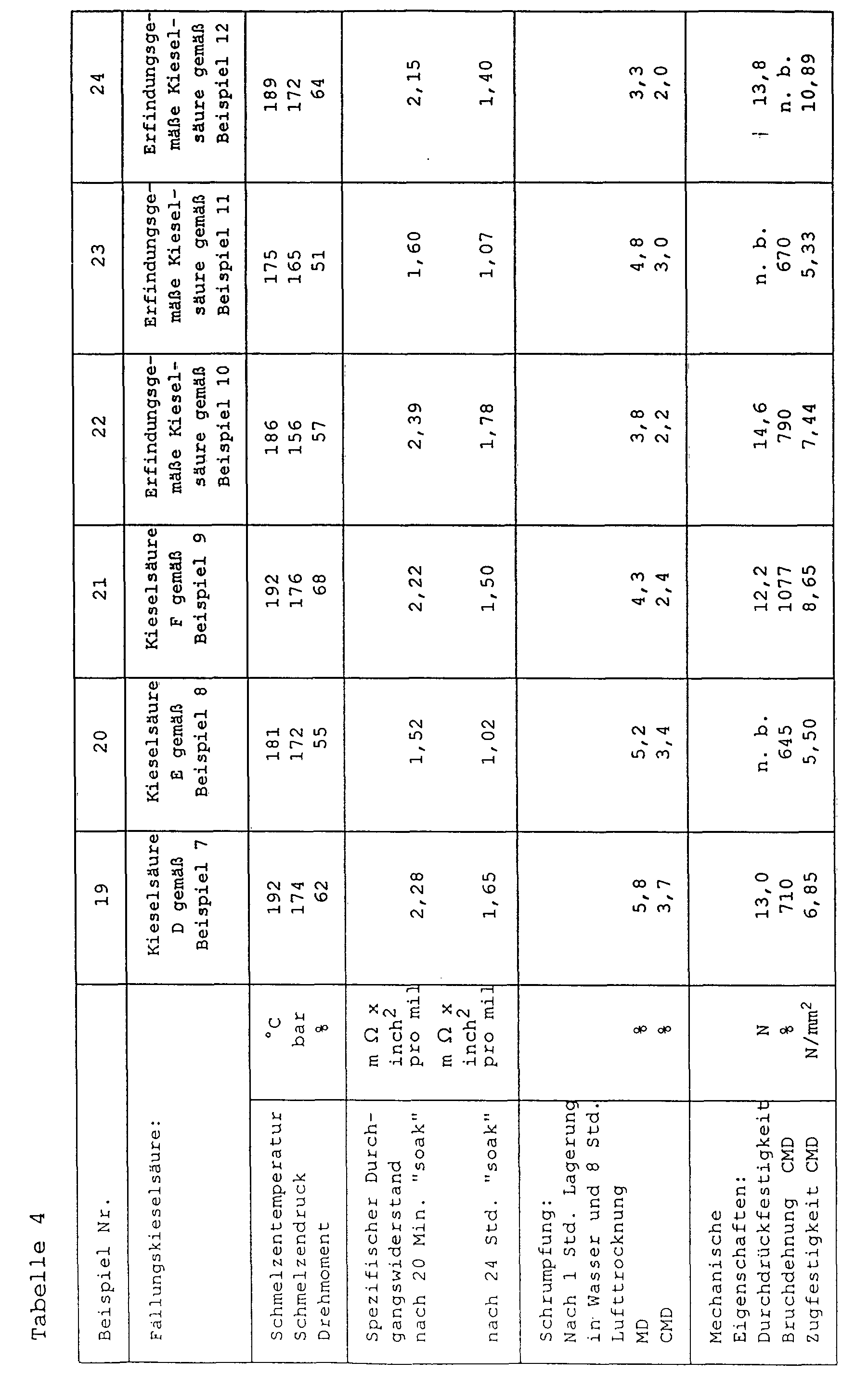

### Beispiel 26

1350 g der handelsüblichen Kieselsäure Ultrasil® VN3 fbg und 150 g wasserfreien Natriumsulfats werden nach Maßgabe des Beispiels 25 zu einer ölhaltigen Separatorfolie verarbeitet. Die Folie wird wie im Beispiel 25 beschrieben extrahiert und in die Lagertests gemäß Beispiel 27 einbezogen.

### Beispiel 27

In einer sog. Soakstudie [Lagerung in den Medien "Batteriesäure" (37 %ige Schwefelsäure) und Wasser (destilliertes Wasser)] werden die auf einen Restölgehalt von 12 - 14 % extrahierten Folien der Beispiele 22, 25 und 26 über einen Zeitraum von acht Wochen gelagert und Messungen des elektrischen Widerstandes nach 1 Stunde, 1 Tag, 1 Woche, 2 Wochen, 4 Wochen, 6 Wochen und 8 Wochen Lagerzeit an den Proben vorgenommen. Die in Wasser gelagerten Folien wurden vor der Messung des elektrischen Durchgangswiderstandes nicht getrocknet, sondern feucht in Batteriesäure vermessen.

Die Ergebnisse dieser Meßreihe sind in der Tabelle 5 zusammengefaßt.

Überraschenderweise wird dabei festgestellt, daß
- der Ausgangswiderstand der Separatoren mit hochsalzhaltigen Kieselsäuren nach einer Stunde Lagerzeit in beiden Medien um bis zu mehr als 50 % niedriger als der der vergleichbaren Folien mit Kieselsäuren mit Normalsalzgehalt ist.
- der einfache Zusatz von kristallinem Natriumsulfat den Ausgangswiderstand nach oben drückt. Das heißt, nicht der rein additive Zusatz des Hydrophilierungsmittels, sondern dessen höchstdisperse Verteilung den obigen Effekt bedingt.
- der Endwiderstand der Separatoren mit den erfindungsgemäßen hochsalzhaltigen Kieselsäuren nach bereits einer Lagerzeit von ca. zwei Wochen in beiden Medien um 33 % niedriger als der momentan erreichbare Stand der Technik mit dem Handelsprodukt Ultrasil® VN3 fbg liegt.
- der Endwiderstand von Separatoren, die durch einfachen Zusatz von Natriumsulfat hergestellt werden, vergleichbar oder höher als der Ausgangswiderstand der mit den erfindungsgemäßen Kieselsäuren hergestellten Separatoren ist.
- das Lagermedium - Batteriesäure oder Wasser - keinen nachhaltigen Unterschied der beobachteten Phänomene aufzeigt. Tendenziell liegen die durch Säurelagerung erreichten elektrischen Widerstandswerte um 8 - 12 % niedriger im Vergleich zur Wasserlagerung.

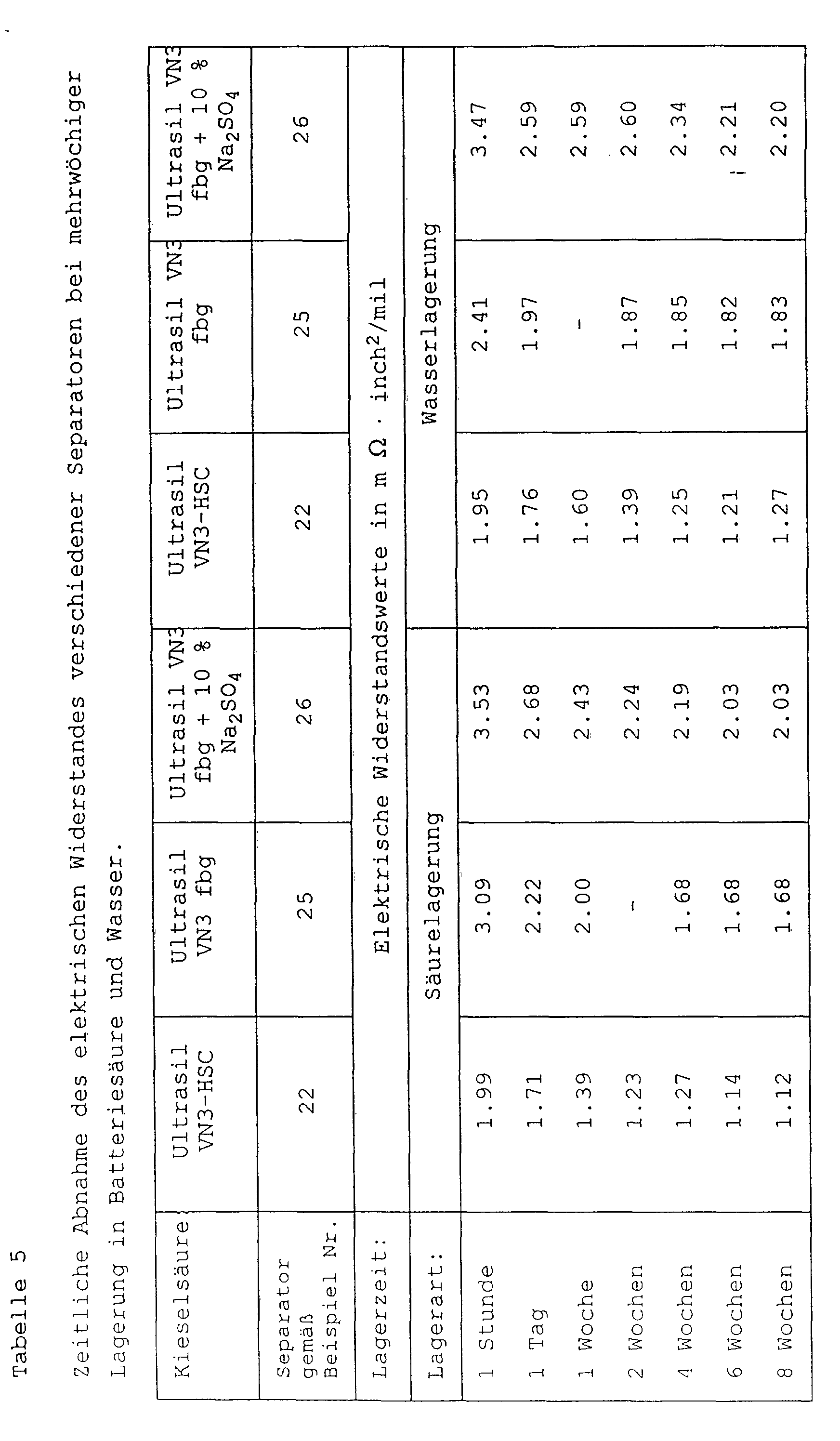

## Patentansprüche

1. Fällungskieselsäure mit einem Gehalt an Natriumsulfat von 4 bis 18 Gew.-%.

2. Fällungskieselsäure gemäß Anspruch 1, gekennzeichnet durch die physikalisch-chemischen Kenndaten:
| | |
|---|---|
| Natriumsulfatgehalt | 4 - 18, insbesondere |
| | 4 - 14 Gew.% |
| BET-Oberfläche (DIN 66131) | 100 - 190 m²/g |
| DBP-Absorption (wasserfrei) (DIN 53601, ASTM D 2414) | 208 - 250 g/100 g |
| Trocknungsverlust (2 h/105 °C) (DIN ISO 787/II, ASTM D 280, JIS K 5101/21) | 3,0 - 6,5 Gew.% |
| Siebrückstand mit ALPINE-Luftstrahlsieb | > 63 µm ≤ 10,0 Gew.% |
| | > 150 µm ≤ 0,1 Gew.% |
| | > 250 µm ≤ 0,01 Gew.% |

3. Verfahren zur Herstellung der Fällungskieselsäure gemäß den Ansprüchen 1 und 2 mit den physikalisch-chemischen Daten:
| | |
|---|---|
| Natriumsulfatgehalt | 4 - 18 Gew.% |
| BET-Oberfläche (DIN 66131) | 100 - 190 m²/g |
| DBP-Absorption (wasserfrei) (DIN 53601, ASTM D 2414) | 208 - 250 g/100 g |
| Trocknungsverlust (2 h/105 °C) (DIN ISO 787/II, ASTM D 280, JIS K 5101/21) | 3,0 - 6,5 Gew.% |
| Siebrückstand mit ALPINE-Luftstrahlsieb | > 63 µm ≤ 10,0 Gew.% |
| | > 150 µm ≤ 0,1 Gew.% |
| | > 250 µm ≤ 0,01 Gew.% |
gemäß Anspruch 1, dadurch gekennzeichnet, daß man in einem Fällbehälter unter Rühren heißes Wasser vorlegt, Wasserglas mit einem Modul SiO₂ : Na₂O = 3,22 ± 0,05 (SiO₂ = 27,73 ± 0,70 Gew.-%; Na₂O = 8,9 ± 0,20 Gew.-%; Dichte 1,362 ± 0,025 g/ml) solange hinzugibt, bis eine Alkalizahl von 7 ± 1 erreicht ist, danach auf eine Temperatur von 89 bis 93 °C aufheizt und bei dieser Temperatur während der gesamten weiteren Fälldauer, während der man weiteres Wasserglas derselben Zusammensetzung und Schwefelsäure gleichzeitig an zwei voneinander getrennten Stellen derart hinzugibt, daß eine Alkalizahl von 7 ± 1 eingehalten wird, danach die Fällungskieselsäuresuspension mit Schwefelsäure bis zu einem pH-Wert von 3,0 - 4,0 ansäuert, die Fällungskieselsäuresuspension, die einen Feststoffgehalt von 72 bis 88 g/l aufweist, mittels einer Filterpresse abtrennt, den erhaltenen ungewaschenen, natriumsulfathaltigen Fällungskieselsäurefilterkuchen mittels Wasser und mechanischer Scherkräfte verflüssigt, mittels eines Sprühtrockners mit Zentrifugalzerstäuber bei einer Drehzahl von 8.500 - 10.000 Umdrehungen pro Minute trocknet und mittels einer Pendelmühle vermahlt.

4. Verfahren nach Anspruch 3, dadurch gekennzeichnet, daß man den Filterkuchen durch Waschen mit Wasser auf Natriumsulfatgehalte von 4,0 - 8,5 %, bezogen auf die getrocknete Fällungskieselsäure, einstellt.

5. Verfahren nach Anspruch 3 dadurch gekennzeichnet, daß man bei pH = 8,5 eine 30-minütige Alterungsstufe anschließt und danach auf pH 3,0 - 4,0 ansäuert.

6. Verfahren nach Anspruch 3, dadurch gekennzeichnet, daß man anstelle des Sprühtrockners einen Spinflashtrockner einsetzt, wobei der ungewaschene Fällungskieselsäurefilterkuchen einen Feststoffgehalt von 29 - 37 Gew.% aufweist, und man gegebenenfalls auf eine Vermahlung verzichtet.

7. Verfahren nach Anspruch 2 - 6, dadurch gekennzeichnet, daß man anstelle einer Pendelmühle eine Querstrommühle zur Vermahlung der Kieselsäure verwendet.

8. Verwendung der Kieselsäure nach Anspruch 1 oder 2 in Batterieseparatoren.

9. Verwendung der Kieselsäure nach Anspruch 1 oder 2 in Polyäthylen-Kieselsäure-Batterieseparatoren für Blei-Säure-Batterien.

10. Batterieseparatoren, die eine Fällungskieselsäure gemäß Anspruch 1 oder 2 enthalten.

11. Batterieseparatoren für Blei-Säure-Batterien, die aus Polyethylen bestehen und eine Fällungskieselsäure gemäß Anspruch 1 oder 2 enthalten.

## Claims

1. Precipitated silica with a sodium sulfate content of 4 to 18 wt.%.

2. Precipitated silica according to claim 1, characterised by the physical-chemical data:
| | |
|---|---|
| Sodium sulfate content | 4 - 18, particularly 4 - 14 wt.% |
| BET surface (DIN 66131) | 100 - 190 m²/g |
| DBP absorption (anhydrous) (DIN 53601, ASTM D 2414) | 208 - 250 g/100 g |
| Loss on drying (2h/105°C) (DIN ISO 787/II, ASTM D 280, JIS K 5101/21) | 3.0 - 6.5 wt.% |
| Oversize with ALPINE air-jet sieve | > 63 *µ*m ≤ 10.0 wt.% |
| | > 150 *µ*m ≤ 0.1 wt.% |
| | > 250 *µ*m ≤ 0.01 wt.% |

3. A process for the preparation of the precipitated silica according to claims 1 and 2 with the physical-chemical data:
| | |
|---|---|
| Sodium sulfate content | 4 - 18 wt.% |
| BET surface (DIN 66131) | 100 - 190 m²/g |
| DBP absorption (anhydrous) (DIN 53601, ASTM D 2414) | 208 - 250 g/100 g |
| Loss on drying (2h/105°C) (DIN ISO 787/II, ASTM D 280, JIS K 5101/21) | 3.0 - 6.5 wt.% |
| Oversize with ALPINE air-jet sieve | > 63 *µ*m ≤ 10.0 wt.% |
| | > 150 *µ*m ≤ 0.1 wt.% |
| | > 250 *µ*m ≤ 0.01 wt.% |
according to claim 1, characterised in that hot water is introduced into a precipitation vessel, with stirring, water glass with an SiO₂ : Na₂O modulus of 3.22 ±0.05 (SiO₂ = 27.73 ± 0.70 wt.%; Na₂O = 8.9 ± 0.20 wt.%; density 1.362 ± 0.025 g/ml) is added until an alkali value of 7 ± 1 is reached, the mixture is then heated to a temperature of 89 to 93°C and at this temperature throughout the remaining precipitation period, during which further water glass of the same composition and sulfuric acid are added simultaneously at two separate places in such a way that an alkali value of 7 ±1 is maintained, the precipitated silica suspension is then acidified with sulfuric acid to a pH of 3.0 - 4.0, the precipitated silica suspension having a solids content of 72 to 88 g/l is separated by means of a filter press, the unwashed, sodium sulfate-containing precipitated silica filter cake obtained is liquefied by means of water and mechanical shear forces, dried by means of a spray drier with a centrifugal atomiser at a speed of 8,500 - 10,000 rpm and ground with a bowl mill.

4. A process according to claim 3, characterised in that the filter cake is adjusted by washing with water to sodium sulfate contents of 4.0 - 8.5% based on the dried precipitated silica.

5. A process according to claim 3, characterised in that, there follows a 30 minute ageing stage at pH 8.5 and the product is then acidified to pH 3.0 - 4.0.

6. A process according to claim 3, characterised in that a spin flash drier is used instead of the spray drier, wherein the unwashed precipitated silica filter cake has a solids content of 29 - 37 wt.%, and grinding is optionally dispensed with.

7. A process according to claim 2 - 6, characterised in that a crossflow mill is used instead of a bowl mill to grind the silica.

8. The use of the silica according to claim 1 or 2 in battery separators.

9. The use of the silica according to claim 1 or 2 in polyethylene-silica battery separators for lead-acid batteries.

10. Battery separators containing a precipitated silica according to claim 1 or 2.

11. Battery separators for lead-acid batteries composed of polyethylene and containing a precipitated silica according to claim 1 or 2.

## Revendications

1. Silice précipitée ayant une teneur en sulfate de sodium de 14 à 18 % en poids.

2. Silice précipitée selon la revendication 1,
caractérisée par
les données physico-chimiques suivantes :
| | |
|---|---|
| Teneur en sulfate de sodium | 4-18, en particulier 4-14 % en poids |
| Surface BET (norme DIN 66131) : Absorption DBP (anhydre)(normes DIN 53601, ASTM D 2414) | 100-190 m²/g 208-250 g/100 g |
| Perte au séchage (2 heures à 105°C) (normes DIN ISO 787/II, ASTM D 280, JIS K 5101/21) | 3,0-6,5 % en poids |
| Résidu d'ébullition avec tamis à courant d'air ALPINE | > 63 µm ≤ 10,0 % en poids > 150 µm ≤ 0,1 % en poids > 250 µm ≤ 0,01 % en poids |

3. Procédé de fabrication de silice précipitée selon les revendications 1 et 2
avec les données physico-chimiques suivantes :
| | |
|---|---|
| Teneur en sulfate de sodium | 4-18, en particulier 4-14 % en poids |
| Surface BET (norme DIN 66131) : Absorption DBP (anhydre)(normes DIN 53601, ASTM D 2414) | 100-190 m²/g 208-250 g/100 g |
| Perte au séchage (2 heures à 105°C) (normes DIN ISO 787/II, ASTM D 280, JIS K 5101/21) | 3,0-6,5 % en poids |
| Résidu d'ébullition avec tamis à courant d'air ALPINE | > 63 µm ≤ 10,0 % en poids > 150 µm ≤ 0,1 % en poids > 250 µm ≤ 0,01 % en poids |
caractérisé en ce que
dans un récipient de précipitation on met, tout en agitant, de l'eau chaude, on ajoute de l'orthosilicate avec un module : SiO₂:Na₂O = 3,22 ± 0,05 (SiO₂ = 27,73 ± 0,70 % en poids ; Na₂O = 8,9 ± 0,20 % en poids ; densité 1,362 ± 0,025 g/ml) jusqu'à ce qu'on atteigne un indice d'alcalinité de 7 ± 1, puis on chauffe à une température de 89 à 93°C, et à cette température on ajoute pendant l'ensemble de la durée ultérieure de la précipitation, une quantité supplémentaire d'orthosilicate de même composition et d'acide sulfurique simultanément en deux endroits séparés l'un de l'autre de manière à conserver un indice d'alcalinité de 7 ± 1, puis on acidifie la suspension de silice précipitée, avec de l'acide sulfurique, jusqu'à un pH de 3,0 - 4,0, on sépare la silice précipitée de la suspension qui présente une teneur en solides de 72 à 88 g/litre, au moyen d'une presse de filtration, on liquéfie le gâteau de filtration de silice précipitée contenant du sulfate de sodium non lavé obtenue en utilisant de l'eau et une force de cisaillement mécanique, on sèche au moyen d'un atomiseur avec le pulvérisateur à centrifugation à une vitesse de rotation de 8500 à 10 000 tours/minute, et on broie au moyen d'un broyeur à pendules centrifuges.

4. Procédé selon la revendication 3,
caractérisé en ce qu'
on règle le gâteau de filtration, par lavage à l'eau, à des teneurs en sulfate de sodium de 4,0 à 8,5 %, par rapport à la silice précipitée séchée.

5. Procédé selon la revendication 3,
caractérisé en ce qu'
on procède à pH 8,5 à une étape de vieillissement de 30 minutes, puis on acidifie à pH 3,0-4,0.

6. Procédé selon la revendication 3,
caractérisé en ce qu'
au lieu de l'appareil de séchage par pulvérisation, on utilise un appareil de séchage instantané avec rotation, le gâteau de filtration de silice précipitée présentant une teneur en solides de 29 à 37 % en poids, et le cas échéant on renonce à un broyage.

7. Procédé selon les revendications 2 à 6,
caractérisé en ce qu'
au lieu d'un broyeur à cylindres centrifuges, on utilise un broyeur à courant transversal pour broyer la silice.

8. Utilisation d'une silice selon la revendication 1 ou 2 dans des séparateurs de batterie.

9. Utilisation de la silice selon la revendication 1 ou 2, dans des séparateurs de batterie polyéthylène-silice pour des batteries au plomb/acide.

10. Séparateur de batteries qui contiennent une silice précipitée selon les revendications 1 ou 2.

11. Séparateur de batterie pour batteries plomb-acide, qui se compose de polyéthylène et qui contient une silice précipitée selon la revendication 1 ou 2.
